# EUROPEAN PATENT APPLICATION

(11) **EP 4 667 764 A1**
(43) Date of publication of application: **24.12.2025**
(21) Application number: 25157690.6
(22) Date of filing: 13.02.2025
(51) Int. Cl.: F16C 27/02, F16C 27/04, F16C 35/077

(54) **MOTOR, ELECTRIC DRIVE SYSTEM AND VEHICLE**

(30) Priority: 18.06.2024 CN 202410789776
(71) Applicant: Xiaomi EV Technology Co., Ltd., 100176 Beijing (CN)
(72) Inventor: GAO, Dangcheng, 100176 Beijing (CN)
(74) Representative: Stöckeler, Ferdinand

(57) **Abstract**

A motor (200) includes a motor rotating shaft (210), a supporting piece (100) and a housing (220), and the housing (220) includes a motor end cover (221), the supporting piece (100) is supported between the outer peripheral side of the motor rotating shaft (210) and the motor end cover (221), and an accommodating cavity (10) suitable for accommodating damping liquid is provided inside the supporting piece (100), and the supporting piece (100) is provided to be elastically deformed under the abutment of the motor rotating shaft (210).

## Description

### FIELD

The present invention relates to the technical field of motors, in particular to a motor, an electric drive system and a vehicle.

### BACKGROUND

At present, in some fields, the demand for high-speed rotation rate of a motor (such as an automotive motor) is increasing. High-speed rotation rate can bring advantages such as a higher power density, a smaller volume of electric drive, a lower weight and lower material cost. The vibration of the motor rotating shaft is an important factor to limit the rotation rate of motor, therefore, how to suppress the vibration of the motor rotating shaft is an important research trend in the field.

### SUMMARY

An object of the present invention is to provide a motor, an electric drive system and a vehicle, so as to at least partially solve the technical problems existing in the related art.

In order to achieve the above object, a first aspect of the present invention provides a motor, including a motor rotating shaft, a supporting piece and a housing, wherein the housing includes a motor end cover, and the supporting piece is supported between an outer peripheral side of the motor rotating shaft and the motor end cover; wherein an accommodating cavity configured to accommodate a damping liquid is provided inside the supporting piece; the supporting piece is provided to undergo elastic deformation under the abutment of the motor rotating shaft.

Optionally, the supporting piece includes a first supporting sub-piece and a second supporting sub-piece, and the accommodating cavity is provided between the first supporting sub-piece and the second supporting sub-piece, and at least one of the first supporting sub-piece and the second supporting sub-piece is provided to undergo elastic deformation under the abutment of the motor rotating shaft.

Optionally, the supporting piece further comprises a sealing ring, and the sealing ring is arranged between an inner wall of the first supporting sub-piece and an inner wall of the second supporting sub-piece; and the sealing ring, the first supporting sub-piece and the second supporting sub-piece enclose the accommodating cavity.

Optionally, the first supporting sub-piece is provided at a side of the accommodating cavity close to the motor rotating shaft, the second supporting sub-piece is provided at a side of the accommodating cavity far from the motor rotating shaft, and the first supporting sub-piece is provided to undergo elastic deformation under the abutment of the motor rotating shaft.

Optionally, the first supporting sub-piece and the second supporting sub-piece are both in an annular structure, and at least part of the first supporting sub-piece is positioned radially inside the second supporting sub-piece.

Optionally, an outer wall of the first supporting sub-piece includes a first outer wall and a second outer wall, wherein the first outer wall and the second outer wall are arranged along an axial direction of the first supporting sub-piece, and the second outer wall is positioned radially inside the first outer wall; and the first outer wall is hermetically connected with the second supporting sub-piece, the second outer wall and the second supporting sub-piece are provided at intervals in the radial direction, the accommodating cavity is positioned between the second outer wall and the second supporting sub-piece, and the second outer wall is able to move in a direction towards the second supporting sub-piece when the supporting piece is undergoing elastic deformation.

Optionally, the outer wall of the first supporting sub-piece further includes a first connecting wall, wherein the first connecting wall extends in the radial direction, and one end of the first connecting wall is connected with the first outer wall, and the other end of the first connecting wall is connected with the second outer wall.

Optionally, the supporting piece further includes a first sealing ring, wherein the first sealing ring is provided between the second outer wall and the inner wall of the second supporting sub-piece; and the first sealing ring, the first supporting sub-piece and the second supporting sub-piece enclose the accommodating cavity.

Optionally, at least one of the second outer wall and the inner wall of the second supporting sub-piece is provided with a first annular snap groove, and a part of the first sealing ring is embedded in the first annular snap groove.

Optionally, the first supporting sub-piece further includes a first annular boss, wherein the first annular boss is provided at one end of the second outer wall far from the first outer wall; and the supporting piece further includes a second sealing ring, and the second sealing ring is provided between an outer peripheral wall of the first annular boss and the motor end cover.

Optionally, the outer peripheral wall of the first annular boss is provided with a second annular snap groove, and a part of the second sealing ring is embedded in the second annular snap groove.

Optionally, a spacing in the radial direction between the second outer wall and the inner wall of the second supporting sub-piece is a first dimension, and a diameter of a annular face where the first outer wall is positioned is a second dimension, and the first dimension is 1‰~5‰ time of the second dimension.

Optionally, the motor further includes a first bearing fitted over the motor rotating shaft, and the inner wall of the first supporting sub-piece includes a first inner wall, a second inner wall and a second connecting wall, wherein the first inner wall and the second inner wall are arranged along the axial direction of the first supporting sub-piece, and the second inner wall is positioned radially outside the first inner wall, and the second inner wall is connected with the first inner wall through the second connecting wall, and the second inner wall abuts against a peripheral wall of the first bearing, and the second connecting wall abuts against an end wall of the first bearing.

Optionally, the first outer wall and the inner wall of the second supporting sub-piece are abutted and attached with a pre-tension force.

Optionally, the first supporting sub-piece further includes a second annular boss, wherein the second annular boss is provided at one end of the first outer wall far from the second outer wall; the second annular boss is provided with a first mounting hole extending axially, and the end of the second supporting sub-piece is provided with a second mounting hole extending axially; and the supporting piece further includes a fastener for connecting the first mounting hole and the second mounting hole.

Optionally, the first supporting sub-piece is provided with a stiffness reducing portion.

Optionally, the first supporting sub-piece and the second supporting sub-piece are both in an annular structure, and the first supporting sub-piece includes a first annular portion and a second annular portion which are connected in the axial direction of the first supporting sub-piece; the first annular portion is positioned at the inner side of the second supporting sub-piece, and the accommodating cavity is positioned between the first annular portion and the second supporting sub-piece; and the second annular portion is provided with the stiffness reducing portion.

Optionally, the stiffness reducing portion includes a hollowed-out portion positioned in the second annular portion.

Optionally, a plurality of hollowed-out portions are provided, and the plurality of hollowed-out portions are arranged at equal intervals along a circumferential direction of the second annular portion, and two adjacent hollowed-out portions are separated by a connecting rib.

Optionally, the first supporting sub-piece further includes a third annular portion, wherein the third annular portion is connected to one end of the second annular portion far from the first annular portion; and the third annular portion is connected with the housing.

Optionally, at least one connecting tab is provided on an outer peripheral wall of the third annular portion, and the connecting tab is suitable for being connected with the end face of the housing through a fastener; and/or, the outer peripheral wall of the third annular portion is abutted against and attached to the inner peripheral wall of the housing with a pre-tension force.

Optionally, the supporting sub-piece further includes a third sealing ring and a fourth sealing ring, and the third sealing ring and the fourth sealing ring are arranged at intervals along the axial direction of the first annular portion between the outer peripheral wall of the first annular portion and the inner wall of the second supporting sub-piece; and the first annular portion, the second supporting sub-piece, the third sealing ring and the fourth sealing ring jointly enclose the accommodating cavity.

Optionally, at least one of the outer peripheral wall of the second annular portion and the inner wall of the second supporting sub-piece is provided with a third annular snap groove, and a part of the third sealing ring is embedded in the third annular snap groove; and/or, at least one of the outer peripheral wall of the second annular portion and the inner wall of the second supporting sub-piece is provided with a fourth annular snap groove, and a part of the fourth sealing ring is embedded in the fourth annular snap groove.

Optionally, a spacing in the radial direction between the outer peripheral wall of the first annular portion and the inner wall of the second supporting sub-piece is a third dimension, a diameter of the annular face where the inner wall of the second supporting sub-piece is positioned is a fourth dimension, and the third dimension is 1‰~5‰ time of the fourth dimension.

Optionally, the inner wall of the first annular portion includes a third inner wall, a fourth inner wall and a third connecting wall, wherein the third inner wall and the fourth inner are arranged along the axial direction of the first annular portion, the third inner wall is positioned radially outside the fourth inner wall, the fourth inner wall is connected with the third inner wall through the third connecting wall, and the third inner wall abuts against the outer peripheral wall of the first bearing installed on the motor rotating shaft, and the third connecting wall abuts against the end wall of the first bearing.

Optionally, the supporting piece is further provided with a liquid inlet and a liquid outlet, which are communicated with the accommodating cavity; and the motor end cover is provided with an oil inlet passage and an oil outlet passage, wherein the oil inlet passage is in communication with the accommodating cavity through the liquid inlet on the support, and the oil outlet passage is in communication with the accommodating cavity through the liquid outlet on the support.

Optionally, the oil inlet passage includes at least an oil inlet passage segment extending along the radial direction of the motor, and one end of the oil inlet passage segment is connected with the liquid inlet; and/or, the oil outlet passage includes at least an oil outlet passage segment arranged obliquely relative to the radial direction of the motor, one end of the oil outlet passage segment is connected with the liquid outlet, and the other end of the oil outlet passage segment extends to the inner end face of the motor end cover.

Optionally, the supporting piece is further provided with a liquid inlet and a liquid outlet, which are communicated with the accommodating cavity, and both the liquid inlet and the liquid outlet are provided on the first supporting sub-piece; or the liquid inlet is provided on the second supporting sub-piece, and the liquid outlet is provided on the first supporting sub-piece.

Optionally, the inner side of the motor end cover is provided with a mounting groove, and the side of the supporting piece far away from the motor rotating shaft along the radial direction of the motor rotating shaft abuts against the groove wall of the mounting groove.

According to a second aspect of the present invention, there is provided an electric drive system, including the motor described above.

Optionally, the electric drive system further includes a reducer, and an input shaft of the reducer is connected with the motor rotating shaft.

According to a third aspect of the present invention, there is provided a vehicle, including the electric drive system described above or the motor described above.

In the present invention, the supporting piece can be supported between the outer peripheral side of the motor rotating shaft and the motor end cover, so that the motor end cover can support the motor rotating shaft. When the motor rotating shaft has a trend of vibration, the supporting piece can be elastically deformed under the abutment of the motor rotating shaft, thereby buffering the vibration of the motor rotating shaft. Secondly, because the supporting piece is internally provided with the accommodating cavity, after the damping liquid is arranged in the accommodating cavity, oil film damping can be formed, and the volume of the accommodating cavity can be compressed when the supporting piece is elastically deformed under the abutment of the motor rotating shaft, so that the damping liquid can be used for buffering, thereby buffering the vibration of the motor rotating shaft. To sum up, the supporting piece of the present invention can perform multiple buffering on the vibration of the motor rotating shaft through elastic deformation and damping liquid in the accommodating cavity, so that the vibration of the motor rotating shaft can be well restrained.

In addition, the supporting piece can be elastically deformed under the abutment of the motor rotating shaft, which can reduce the supporting stiffness of the motor end cover to the motor rotating shaft, thus being beneficial to better restraining the vibration of the motor rotating shaft. Through the above solution, the high-speed rate of the motor rotating shaft is allowed, which is beneficial to the advantages of a higher power density, a smaller volume of the electric drive, a lower weight and lower material cost brought by high speed.

Other features and advantages of the present invention will be described in detail in the following detailed description.

### BRIEF DESCRIPTION OF THE DRAWINGS

The accompanying drawings are used to provide a further understanding of the present invention and constitute a part of the specification, and together with the following detailed description, serve to explain the present invention, but do not constitute a limitation of the present invention.
FIG. 1 is a partial sectional schematic view of an electric drive system provided by an embodiment of the present invention, in which only some parts of a motor and a reducer are shown;
FIG. 2 is a partially enlarged schematic view at part A in FIG. 1;
FIG. 3 is a partially enlarged schematic view at part B in FIG. 1;
FIG. 4 is a perspective structural schematic view of a supporting piece provided by a first embodiment of the present invention;
FIG. 5 is a partial sectional schematic view of the supporting piece provided by the first embodiment of the present invention;
FIG. 6 is a perspective structural schematic view of a supporting piece provided by a second embodiment of the present invention;
FIG. 7 is a partial sectional schematic view of the supporting piece provided in the second embodiment of the present invention;
FIG. 8 is a perspective structural schematic view of a supporting piece provided by a third embodiment of the present invention;
FIG. 9 is a partial sectional schematic view of the supporting piece shown in FIG. 8;
FIG. 10 is a perspective structural schematic view of a supporting piece in an assembled state with a housing provided by a fourth embodiment of the present invention;
FIG. 11 is a perspective structural schematic view of the supporting piece provided by the fourth embodiment of the present invention;
FIG. 12 is a sectional schematic view of the supporting piece shown in FIG. 10;
FIG. 13 is a partial sectional schematic view of the supporting piece shown in FIG. 10;
FIG. 14 is a partially enlarged schematic view at part C of FIG. 13.

### DETAILED DESCRIPTION

Hereinafter, specific embodiments of the present invention will be described in detail with reference to the accompanying drawings. It should be understood that the specific embodiments described here are only used to illustrate and explain the present invention, and are not used to limit the present invention.

In the present disclosure, it should be understood that, unless otherwise stated, the orientation words such as "up", "down", "top "bottom" are defined based on the direction in the drawing shown in the corresponding drawings, and are only for the convenience of describing the present invention and simplifying the description, and do not indicate or imply that the referred device or element must have a specific orientation, a specific orientation configuration and operation, which therefore cannot be understood as limitation to the present invention. The terms "inside and outside" can refer to the inside and outside of the corresponding structural profile. In addition, the terms "first" and "second" are used to distinguish one element from another and don't indicate sequence and importance.

In the description of the present disclosure, it should also be noted that unless otherwise specified and limited, the terms "provide", "connect", "interconnect" and "mount" should be broadly understood, for example, they can be fixed connection, detachable connection or integrated connection; It can be direct connection or indirect connection through an intermediary. For those skilled in the art, the specific meanings of the above terms in the present disclosure can be understood according to specific situations.

It is found that unbalanced excitation of the motor will increase with the increase of the motor rotation rate, especially when the motor is in a high-speed range, the higher the supporting stiffness for the motor rotating shaft, the greater the vibration of the motor rotating shaft. Therefore, the supporting stiffness for the motor rotating shaft is an important factor affecting the vibration of the motor rotating shaft.

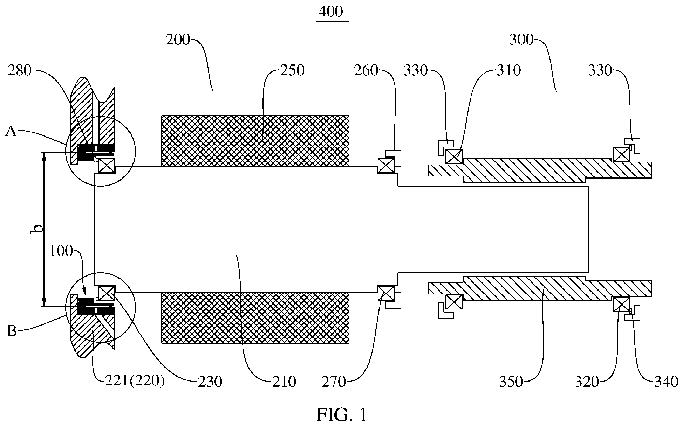

In view of above description, as shown in FIGS. 1 to 14, according to a first aspect of the present invention, a motor 200 is provided, which includes a motor rotating shaft 210, a supporting piece 100 and a housing 220, and the housing 220 includes a motor end cover 221, and the supporting piece 100 is supported between the outer peripheral side of the motor rotating shaft 210 and the motor end cover 221, and an accommodating cavity 10 suitable for accommodating damping liquid is provided inside the supporting piece 100, and the supporting piece 100 is configured to be elastically deformed under the abutment of the motor rotating shaft 210.

In the present invention, the supporting piece 100 can be supported between the outer peripheral side of the motor rotating shaft 210 and the motor end cover 221, so that the motor end cover 221 can support the motor rotating shaft 210. When the motor rotating shaft 210 has a trend of vibration, the supporting piece 100 can be elastically deformed under the abutment of the motor rotating shaft 210, thereby buffering the vibration of the motor rotating shaft 210. In addition, because the supporting piece 100 is internally provided with the accommodating cavity 10, and oil film damping can be formed after the damping liquid is provided in the accommodating cavity 10, and the volume of the accommodating cavity 10 can be compressed when the supporting piece 100 is elastically deformed under the abutment of the motor rotating shaft 210, so that buffering effect can be realized by the damping liquid can be used for, thereby buffering the vibration of the motor rotating shaft 210. To sum up, the supporting piece 100 of the present invention can achieve multiple buffering for the vibration of the motor rotating shaft 210 through elastic deformation and the damping liquid in the accommodating cavity 10, so that the vibration of the motor rotating shaft 210 can be well suppressed.

Moreover, because the supporting piece 100 is provided to be elastically deformed under the abutment of the motor rotating shaft 210, the support stiffness of the motor end cover 221 to the motor rotating shaft 210 can be reduced, thus being beneficial to better suppressing the vibration of the motor rotating shaft 210. Through the above technical solution, the high-speed rotation rate of the motor rotating shaft can be allowed, which is beneficial to having advantages of a higher power density, a smaller volume of electric drive, a lower weight and a lower material cost brought by high speed.

In addition, the accommodating cavity 10 is provided inside the supporting piece 100. On the one hand, the volume of the accommodating cavity 10 can be made to be larger without being limited by the dimension of the first bearing 230 of the motor rotating shaft 210, and the dimension of the accommodating cavity 10 is allowed to be increased, so that the accommodating cavity 10 can accommodate enough damping liquid, which is therefore beneficial to improving the damping effect and further enabling the supporting piece 100 to better suppress the vibration of the motor rotating shaft 210. On the other hand, it is also possible to prevent the damping liquid from contacting the surface of the motor end cover 221, thereby preventing the damping liquid from eroding the surface of the motor end cover 221.

It can be understood that the motor provided by the present invention can be applied to any suitable field, especially the field requiring high rotation speed. For example, the motor can be used in the field of vehicles or wind turbines, which is not limited by the present invention.

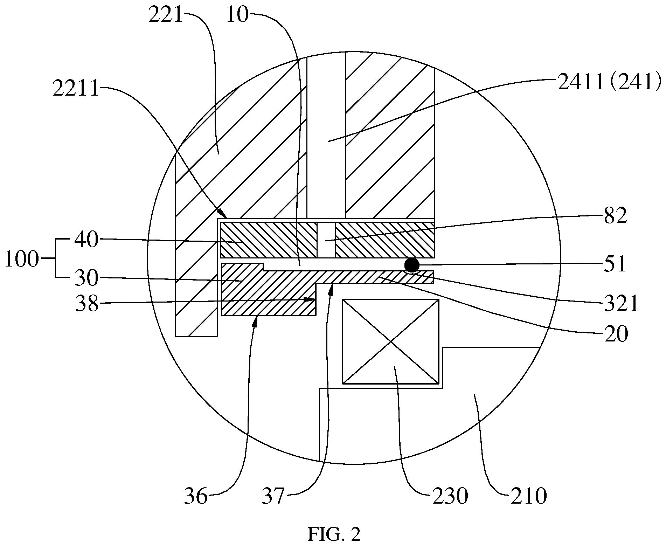

The present invention does not limit the specific structure of the supporting piece 100. Optionally, in some embodiments of the present invention, as shown in FIGS. 2 to 9 and FIGS. 12 to 14, the supporting piece 100 may include a first supporting sub-piece 30 and a second supporting sub-piece 40, and the accommodating cavity 10 is arranged between the first supporting sub-piece 30 and the second supporting sub-piece 40, and at least one of the first supporting sub-piece 30 and the second supporting sub-piece 40 is provided to be elastically deformed under the abutment of the motor rotating shaft 210 so as to compress the volume of the accommodating cavity 10. In other words, the vibration of the motor rotating shaft 210 can be buffered and the supporting stiffness of the supporting piece 100 to the motor rotating shaft 210 can be reduced by elastic deformation of the first supporting sub-piece 30, or elastic deformation of the second supporting sub-piece 40, or elastic deformation of both the first supporting sub-piece 30 and the second supporting sub-piece 40.

Herein, both the first supporting sub-piece 30 and the second supporting sub-piece 40 may be assembled or integrally formed, which is not limited by the present invention.

In some embodiments of the present invention, as shown in FIGS. 2 to 9 and 12 to 14, the first supporting sub-piece 30 is provided at the side of the accommodating cavity 10 near the motor rotating shaft 210 (i.e., the side near the motor rotating shaft 210 in the radial direction of the motor rotating shaft 210), the second supporting sub-piece 40 is provided at the side of the accommodating cavity 10 away from the motor rotating shaft 210 (i.e., the side away from the motor rotating shaft 210 in the radial direction of the motor rotating shaft 210), and the first supporting sub-piece 30 is configured to be elastically deformed under the abutment of the motor rotating shaft 210.

Because the first supporting sub-piece 30 is provided on the side of the accommodating cavity 10 close to the motor rotating shaft 210 and the second supporting sub-piece 40 is arranged on the side of the accommodating cavity 10 far away from the motor rotating shaft 210, when the motor rotating shaft 210 generates a trend of vibration, the first supporting sub-piece 30 can elastically deform towards the second supporting sub-piece 40 in time and compress the accommodating cavity 10, thereby suppressing the vibration of the motor rotating shaft 210.

The present invention does not limit the structures of the first supporting sub-piece 30 and second supporting sub-piece 40. As shown in Figures 1, 5, 7, 9 and 12, in some embodiments of the present invention, the first supporting sub-piece 30 and second supporting sub-piece 40 are both in an annular structure, and at least part of the first supporting sub-piece 30 is positioned radially inside the second supporting sub-piece 40.

By providing the first supporting sub-piece 30 and the second supporting sub-piece 40 to be an annular structure, the peripheral side of the motor rotating shaft 210 can be uniformly supported by the supporting piece 100, which is beneficial to improving the suppression effect of the supporting piece 100 on the vibration of the motor rotating shaft 210.

In other embodiments of the present invention, a plurality of first supporting sub-pieces 30 and a plurality of second supporting sub-pieces 40 are provided and are both block structures, and the plurality of first supporting sub-members 30 and second supporting sub-pieces 40 are in one-to-one correspondence and are arranged around the circumference of the motor rotating shaft 210 at intervals.

The present invention does not limit the manner of elastic deformation of the first supporting sub-piece 30. As shown in FIGS. 2 to 9, in some embodiments of the present invention, the outer wall of the first supporting sub-piece 30 includes a first outer wall 31 and a second outer wall 32, and the first outer wall 31 and the second outer wall 32 are arranged along the axial direction of the first supporting sub-piece 30, and the second outer wall 32 is positioned radially inside the first outer wall 31, and the first outer wall 31 is hermetically connected with the second supporting sub-piece 40. The second outer wall 32 is spaced apart from the second supporting sub-piece 40 in the radial direction, and the accommodating cavity 10 is positioned between the second outer wall 32 and the second supporting sub-piece 40, and the second outer wall 32 can move in the direction towards the second supporting sub-piece 40 when the supporting piece 100 is elastically deformed.

Since the first outer wall 31 and the second outer wall 32 are arranged along the axial direction of the first supporting sub-piece 30, and the first outer wall 31 is hermetically connected with the second supporting sub-piece 40, and the accommodating cavity 10 is positioned between the second outer wall 32 and the second supporting sub-piece 40, the first supporting sub-piece 30 can form a cantilever structure, and the corresponding part of the second outer wall 32 on the first supporting sub-piece 30 can be formed as an elastic deformation portion 20. When the elastic deformation portion 20 is abutted by the supporting piece 100, the elastic deformation portion 20 can be elastically deformed, so that the second outer wall 32 moves towards the second supporting sub-piece 40 and compresses the volume of the accommodating cavity 10.

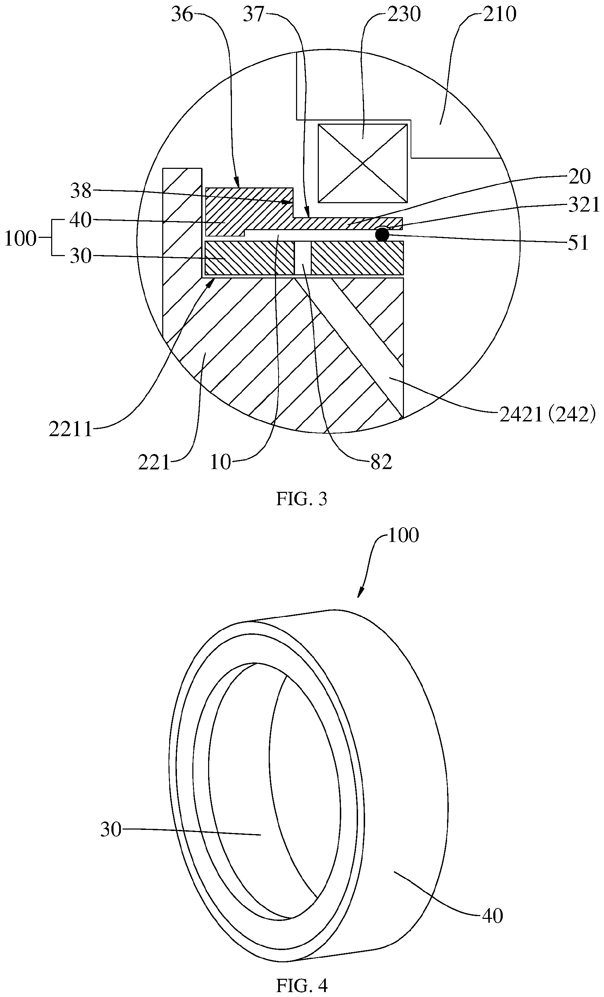

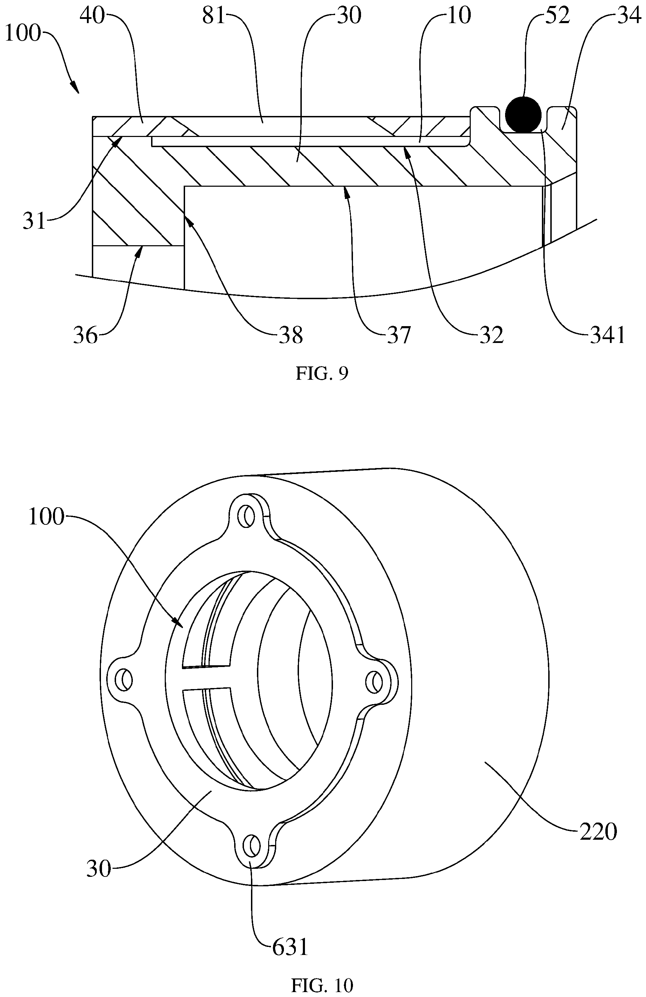

Herein, the sealing connection between the first outer wall 31 and the second supporting sub-piece 40 can be achieved by interference fit between the first outer wall 31 and the second supporting sub-piece 40 (refer to FIG. 9), besides, by fit of the inner walls of the first outer wall 31 and the second supporting sub-piece 40 in FIGS. 2 and 3 while FIGS. 2 and 3 show a state of no fit of the first outer wall 31 and the second supporting sub-piece 40, or by setting a sealing piece between the first outer wall 31 and the second supporting sub-piece 40, which is not limited by the present invention.

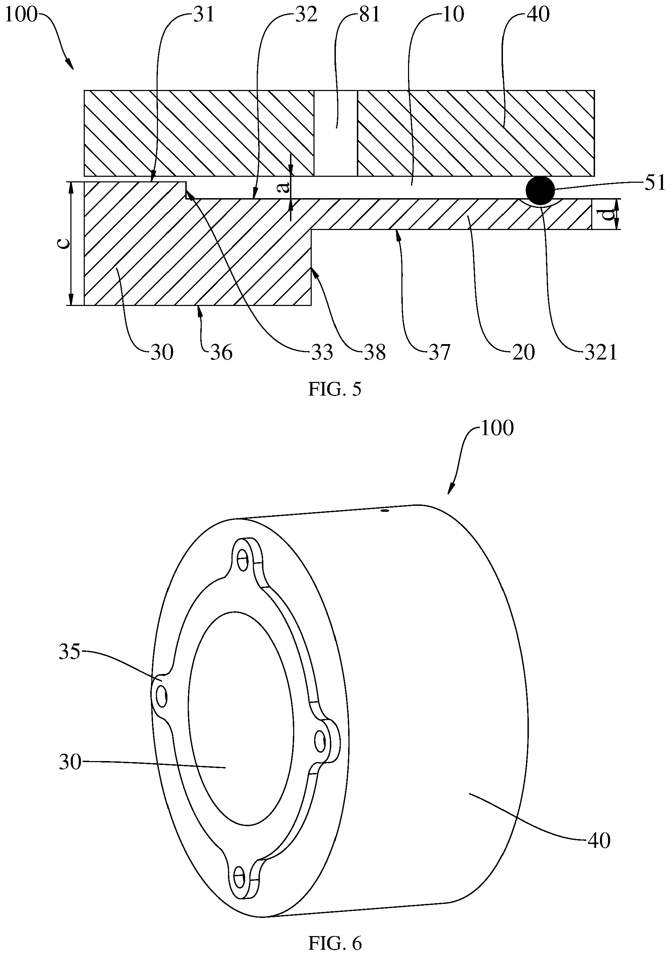

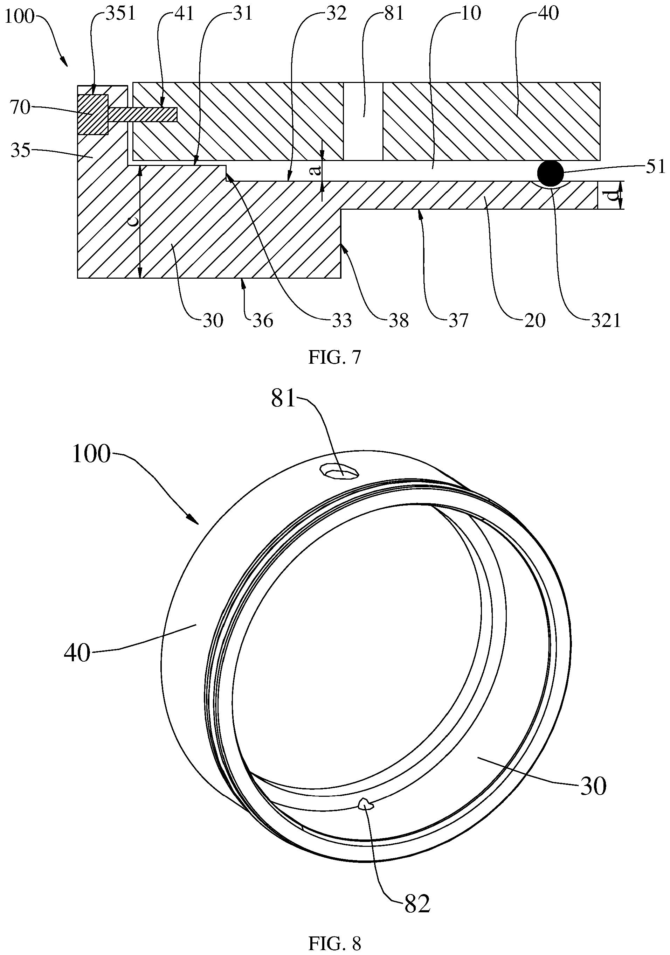

The present invention does not limit the transition structure between the first outer wall 31 and the second outer wall 32. As shown in FIGS. 5 and 7, in some embodiments of the present invention, the outer wall of the first supporting sub-piece 30 may further include a first connecting wall 33, which extends in the radial direction, and one end of the first connecting wall 33 is connected with the first outer wall 31, and the other end of the first connecting wall 33 is connected with the second outer wall 32.

In other embodiments of the present invention, the first outer wall 31 and the second outer wall 32 may be connected by a cambered transition.

In order to make the accommodating cavity 10 seal the damping liquid well, as shown in FIGS. 2, 3, 5 and 6, the supporting piece 100 further includes a first sealing ring 51, and the first sealing ring 51 is provided between the second outer wall 32 and the inner wall of the second supporting sub-piece 40, and the first sealing ring 51, the first supporting sub-piece 30 and the second supporting sub-piece 40 enclose the accommodating cavity 10.

In embodiments, because the first sealing ring 51 can always keep in sealing contact with the second outer wall 32 and the inner wall of the second supporting sub-piece 40 during the movement of the second outer wall 32, the first sealing ring 51 can well prevent damping liquid from leaking out of the accommodating cavity 10 from between the second outer wall 32 and the inner wall of the second supporting sub-piece 40, so that the accommodating cavity 10 can well seal the damping liquid.

As shown in FIGS. 5 and 6, at least one of the second outer wall 32 and the inner wall of the second supporting sub-piece 40 may be provided with a first annular snap groove 321, and a part of the first sealing ring 51 is embedded in the first annular snap groove 321. Limiting the first sealing ring 51 by the first annular snap groove 321 is not only convenient for the first sealing ring 51 to be assembled in the correct position during assembly, but also can prevent the first sealing ring 51 from moving axially (for example, along the axial direction of the motor rotating shaft 210) relative to the second outer wall 32, thus being beneficial to avoiding the sealing failure of the damping liquid by the accommodating cavity 10.

In order to make the accommodating cavity 10 seal the damping liquid well, in another embodiment, as shown in FIG. 9, the first supporting sub-piece 30 may further include a first annular boss 34 arranged at one end of the second outer wall 32 far away from the first outer wall 31, and the supporting piece 100 further includes a second sealing ring 52 arranged between the outer peripheral wall of the first annular boss 34 and the motor end cover 221.

In embodiments, because the first annular boss 34 can move synchronously with the second outer wall 32, and the second sealing ring 52 can always keep sealing contact with the outer peripheral wall of the first annular boss 34 and the inner wall of the motor end cover 221 during the movement of the first annular boss 34, the second sealing ring 52 can well prevent damping liquid from leaking out of the accommodating cavity 10 from between the outer peripheral wall of the first annular boss 34 and the inner wall of the motor end cover 221, so that the accommodating cavity 10 can be well sealed for damping liquid.

Herein, the accommodating cavity 10 can be defined by the end wall of the first annular boss 34, the second outer wall 32, the first connecting wall 33 and the inner wall of the second supporting sub-piece 40.

As shown in FIG. 9, the outer peripheral wall of the first annular boss 34 may be provided with a second annular snap groove 341, and part of the second sealing ring 52 is embedded in the second annular snap groove 341. Limiting the second sealing ring 52 by the second annular snap groove 341 is not only convenient to assemble the second sealing ring 52 in the correct position during its assembly, but also can prevent the second sealing ring 52 from moving axially (for example, along the axial direction of the motor rotating shaft 210) relative to the outer peripheral wall of the first annular boss 34, thus being beneficial to avoiding the sealing failure of the damping liquid by the accommodating cavity 10.

In the present invention, the dimension of the accommodating cavity 10 along the radial direction of the motor rotating shaft 210 can be set to any suitable dimension, which is not limited in the present invention. As shown in FIGS. 1, 5 and 7, the radial distance between the second outer wall 32 and the inner wall of the second supporting sub-piece 40 is a first dimension a (that is, the dimension of the accommodating cavity 10 along the radial direction of the motor rotating shaft 210), and the diameter of the annular surface where the first outer wall 31 is positioned is a second dimension b. The first dimension a can be 1‰~5‰ time of the second dimension b. By setting the first dimension a as 1‰~5‰ of the second dimension b, the damping liquid in the accommodating cavity 10 can have an appropriate thickness, which is beneficial for the supporting piece 100 to better suppress the vibration of the motor rotating shaft 210.

Herein, optionally, the second dimension b may be 65 mm to 75 mm.

Optionally, as shown in FIGS. 1-7 and 9, the motor 200 may further include a first bearing 230 fitted over the motor rotating shaft 210. The inner wall of the first supporting sub-piece 30 includes a first inner wall 36, a second inner wall 37 and a second connecting wall 38, and the first inner wall 36 and the second inner wall 37 are arranged along the axial direction of the first supporting sub-piece 30, and the second inner wall 37 is positioned in the outer side of the first inner wall 36 in the radial direction, and the second inner wall 37 is connected with the first inner wall 36 through a second connecting wall 38, the second inner wall 37 abuts against the peripheral wall of the first bearing 230, and the second connecting wall 38 abuts against the end wall of the first bearing 230..

The first supporting sub-piece 30 can well support the motor rotating shaft 210 through the first bearing 230 when the motor rotating shaft 210 is rotating. The first supporting sub-piece 30 abuts against the outer peripheral wall of the first bearing 230 through the second inner wall 37 and abuts against the end wall of the first bearing 230 through the second connecting wall 38, which is beneficial to improving the efficiency and accuracy of assembly between the first supporting sub-piece 30 and the first bearing 230.

In order to realize the connection between the first outer wall 31 and the second supporting sub-piece 40, in an embodiment of the present invention, optionally, as shown in FIG. 9, the first outer wall 31 and the inner wall of the second supporting sub-piece 40 can optionally be abutted and attached with pre-tension, for example, the first outer wall 31 can be interference fitted with the inner wall of the second supporting sub-piece 40.

In order to realize the connection between the first outer wall 31 and the second supporting sub-piece 40, optionally, in another embodiment of the present invention, as shown in FIG. 7, the first supporting sub-piece 30 may further include a second annular boss 35, and the second annular boss 35 is provided at one end of the first outer wall 31 far away from the second outer wall 32, and is provided with a first mounting hole 351 extending in the axial direction (such as in the axial direction of the motor rotating shaft 210); the end of the second supporting sub-piece 40 is provided with a second mounting hole 41 extending in the axial direction (such as the axial direction of the motor rotating shaft 210), and the supporting piece 100 further includes a fastener 70 for connecting the first mounting hole 351 and the second mounting hole 41. In other words, the first mounting hole 351 and the second mounting hole 41 can be connected by the fastener 70, and the connection between the first outer wall 31 and the second supporting sub-piece 40 can be realized.

For example, the first mounting hole 351 may be a countersunk hole, the first mounting hole 351 may be a threaded hole, and the fastener 70 may be a countersunk bolt. The countersunk bolt may pass through the countersunk hole and be threadedly connected with the threaded hole to realize the connection between the first outer wall 31 and the second supporting sub-piece 40. In addition, the head of the countersunk bolt can be accommodated through the countersunk hole, thus avoiding the interference of the fastener 70 with other structures of the motor 200 (such as the mounting groove 2211 of the motor end cover 221).

It can be understood that the first outer wall 31 and the inner wall of the second supporting sub-piece 40 can be abutted against each other with a pre-tension force and connected through the fastener 70, which is not limited by the present invention.

In the present invention, the thickness of the first inner wall 36 and the thickness of the second inner wall 37 on the first supporting sub-piece 30 can be designed respectively according to actual needs, and the stiffness of the first supporting sub-piece 30 can be adjusted, so as to adjust the stiffness of the supporting piece 100 to the motor rotating shaft 210. For example, the stiffness of the first supporting sub-piece 30 can be reduced by reducing the thickness of the position where the first inner wall 36 is positioned on the first supporting sub-piece 30, or by reducing the thickness of the position where the second inner wall 37 is positioned.

Optionally, as shown in FIGS. 5 and 7, the thickness c of the position where the first inner wall 36 is positioned on the first supporting sub-piece 30 may be 6.8 mm to 7.2 mm,

Optionally, as shown in FIGS. 5 and 7, the thickness d of the position where the second inner wall 37 is positioned on the first supporting sub-piece 30 may be 1.8 mm to 2.2 mm.

In the present invention, in order to enable the supporting piece 100 to elastically deform, it can be realized in many other embodiments besides the above-mentioned embodiments where the part corresponding to the second outer wall 32 on the first supporting sub-piece 30 being configured as the elastic deformation portion 20. For example, in an embodiment, as shown in FIGS. 10 to 14, the first supporting sub-piece 30 can be provided with a stiffness reducing portion 90, which is beneficial to the elastic deformation of the supporting piece 100 under the abutment of the motor rotating shaft 210. Moreover, the stiffness of the supporting piece 100 can be reduced by providing the stiffness reducing portion 90 in the first supporting sub-piece 30, which is therefore beneficial to the supporting piece 100 to suppress the vibration of the motor rotating shaft 210.

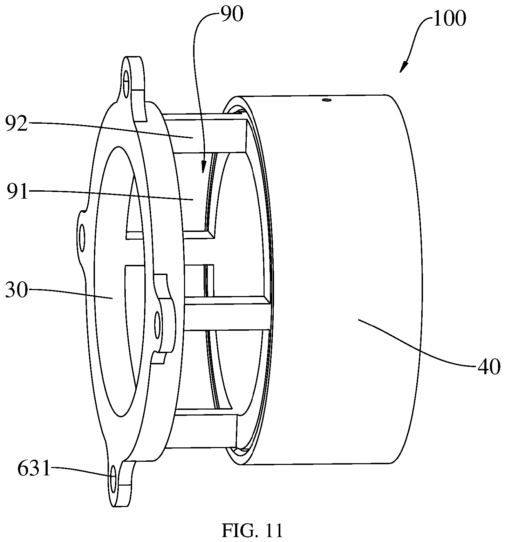

The present invention does not limit the structures of the first supporting sub-piece 30 and the second supporting sub-piece 40. In an embodiment, as shown in FIGS. 11 to 13, both the first supporting sub-piece 30 and the second supporting sub-piece 40 are annular structures. The first supporting sub-piece 30 includes a first annular portion 61 and a second annular portion 62 connected in its own axial direction, and the first annular portion 61 is positioned inside the second supporting sub-piece 40 and the accommodating cavity 10 is positioned between the first annular portion 61 and the second supporting sub-piece 40, and the second annular portion 62 is provided with a rigidity reducing portion 90.

Because the first annular portion 61 is positioned inside the second supporting sub-piece 40, and the second annular portion 62 is provided with the stiffness reducing portion 90, when the motor rotating shaft 210 generates a trend of vibration, the lower stiffness of the second annular portion 62 is beneficial to the first annular portion 61 undergoing elastic deformation towards the second supporting sub-piece 40 in time, and to compress the accommodating cavity 10, so as to suppress the vibration of the motor rotating shaft 210 in time.

In addition, providing both the first supporting sub-piece 30 and the second supporting sub-piece 40 in an annular structure is also beneficial for the circumferential side of the motor rotating shaft 210 to be uniformly supported by the supporting piece 100, thus being beneficial for improving the suppression effect of the supporting piece 100 on the vibration of the motor rotating shaft 210.

The present invention does not limit the structure of the stiffness reducing portion 90. In an embodiment, as shown in FIG. 11, the stiffness reducing portion 90 may include a hollowed-out portion 91 positioned in the second annular portion 62.

In other embodiments of the present invention, the stiffness reducing portion 90 may be configured as a recessed portion positioned in the second annular portion 62.

The present invention does not limit the number of hollowed-out portion 91. As shown in FIG. 11, there may be a plurality of hollowed-out portions 91, and the plurality of hollowed-out portions 91 are arranged at equal intervals along the circumferential direction of the second annular portion 62, and two adjacent hollowed-out portions 91 are separated by a connecting rib 92. The arrangement of the plurality of hollowed-out portions 91 is beneficial to the uniform stiffness of the second annular portion 62 in the circumferential direction, thereby being beneficial to the supporting piece 100 to better suppress the vibration of the motor rotating shaft 210.

In the present invention, the number, length and thickness of the connecting rib 92 can be designed according to actual needs, so that the supporting piece 100 has appropriate stiffness. For example, the stiffness of the supporting piece 100 can be reduced by reducing the number of the connecting ribs 92, or by reducing the length of the connecting ribs 92, or by designing the connecting ribs 92 to be thinner.

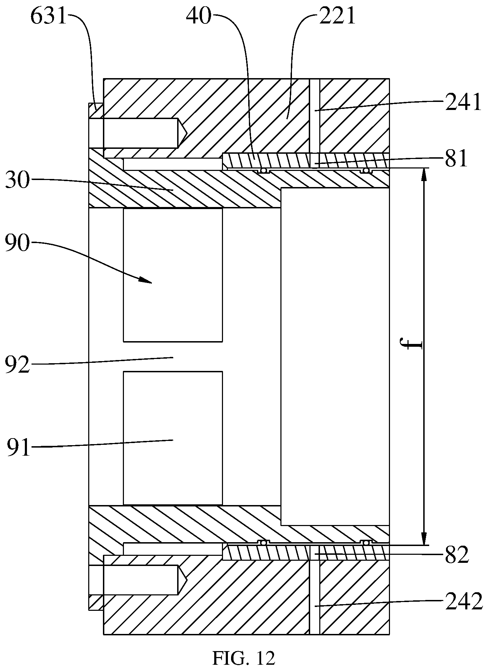

In order to realize the connection between the supporting piece 100 and the housing 220, in an embodiment, as shown in FIGS. 11 and 12, the first supporting sub-piece 30 may further include a third annular portion 63, and the third annular portion 63 is connected to the end of the second annular portion 62 far away from the first annular portion 61, and is connected to the housing 220 (such as the motor end cover 221). That is, the third annular portion 63 is connected with the housing 220 to realize the connection between the first supporting sub-piece 30 and the housing 220, so as to realize the connection between the supporting piece 100 and the housing 220.

Moreover, the third annular portion 63 is connected to the end of the second annular portion 62 far away from the first annular portion 61, which can also reduce the influence of the connection between the supporting piece 100 and the housing 220 on the movement of the first annular portion 61 towards the second supporting sub-piece 40 under the abutment of the motor rotating shaft 210.

In the present invention, the third annular portion 63 and the housing 220 can be connected by any suitable means, which is not limited in the present invention. Optionally, as shown in FIGS. 10 to 13, at least one connecting tab 631 is arranged on the outer peripheral wall of the third annular portion 63, and the connecting tab 631 is connected with the end face of the housing 220 through a fastener 70. For example, the connecting tab 631 is provided with a third mounting hole, and the housing 220 is provided with a fourth mounting hole, and the fastener 70 is a threaded fastener 70, the threaded fastener 70 passes through the third mounting hole and is threadedly connected with the fourth mounting hole to realize the connection between the third annular portion 63 and the housing 220.

Optionally, the outer circumferential wall of the third annular portion 63 abuts against the inner circumferential wall of the housing 220 with a pre-tension force, for example, the outer circumferential wall of the third annular portion 63 is in interference fit with the inner circumferential wall of the housing 220.

The present invention also does not limit the number of the connection tabs 631. Optionally, as shown in FIG. 11, a plurality of the connection tabs 631 may be provided, and the plurality of the connection tabs 631 are arranged at intervals along the circumferential direction of the third annular portion 63.

Herein, it can be understood that the third annular portion 63 and the housing 220 can not only be connected with the end face of the housing 220 through the connecting tab 631, but also abut against the inner peripheral wall of the housing 220 through the outer peripheral wall of the third annular portion 63 with a pre-tension force.

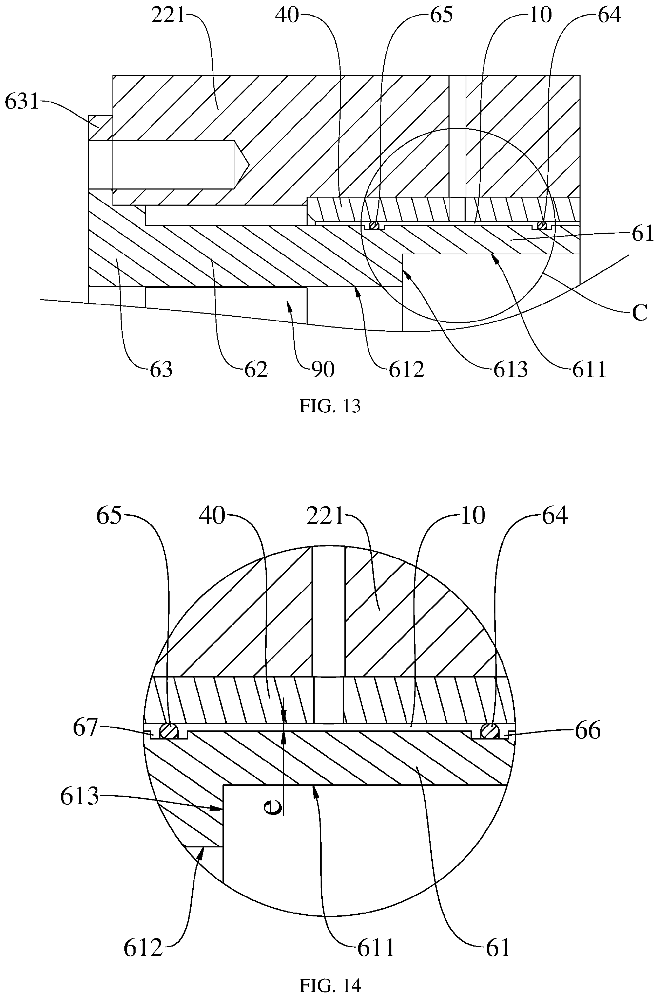

In order to make the accommodating cavity 10 seal the damping liquid well, in an embodiment, as shown in FIGS. 13 and 14, the first supporting sub-piece may further include a third sealing ring 64 and a fourth sealing ring 65, and the third sealing ring 64 and the fourth sealing ring 65 are provided at intervals along the axial direction of the first annular portion 61 between the outer peripheral wall of the first annular portion 61 and the inner wall of the second supporting sub-piece 40. The first annular portion 61, the second supporting sub-piece 40, the third sealing ring 64 and the fourth sealing ring 65 together enclose the accommodating cavity 10.

In embodiments, during the movement of the second annular portion 62, the third sealing ring 64 and the fourth sealing ring 65 can always keep in sealing contact with the outer peripheral wall of the first annular portion 61 and the inner wall of the second supporting sub-piece 40, so that the third sealing ring 64 and the fourth sealing ring 65 can well prevent damping liquid from leaking out of the accommodating cavity 10 from between the outer peripheral wall of the first annular portion 61 and the inner wall of the second supporting sub-piece 40, thus enabling the accommodating cavity 10 to well seal the damping liquid.

Optionally, as shown in FIG. 14, at least one of the outer peripheral wall of the second annular portion 62 and the inner wall of the second supporting sub-piece 40 can be provided with a third annular snap groove 66, and a part of the third sealing ring 64 is embedded in the third annular snap groove 66. Limiting the third sealing ring 64 by the third annular snap groove 66 is not only convenient for the third sealing ring 64 to be assembled in a correct position during its assembly, but also can avoid the third sealing ring 64 from moving axially (for example, along the axial direction of the motor rotating shaft 210) relative to the first annular portion 61, thereby being beneficial to avoiding the failure of sealing the damping liquid by the accommodating cavity 10.

Optionally, as shown in FIG. 14, at least one of the outer peripheral wall of the second annular portion 62 and the inner wall of the second supporting sub-piece 40 may be provided with a fourth annular snap groove 67, and a part of the fourth sealing ring 65 is embedded in the fourth annular snap groove 67. Limiting the fourth sealing ring 65 by the fourth annular snap groove 67 is not only convenient for the fourth sealing ring 65 to be assembled in the correct position during assembly, but also can prevent the fourth sealing ring 65 from moving axially (for example, along the axial direction of the motor rotating shaft 210) relative to the first annular portion 61, thus being beneficial to avoiding the sealing failure of the damping liquid by the accommodating cavity 10.

In the present invention, the dimension of the accommodating cavity 10 along the radial direction of the motor rotating shaft 210 can be set to any suitable dimension, which is not limited in the present invention. In an embodiment, as shown in FIGS. 12 and 14, the spacing in the radical direction between the outer peripheral wall of the first annular portion 61 and the inner wall of the second supporting sub-piece 40 is a third dimension e, the diameter of the annular surface where the inner wall of the second supporting sub-piece 40 is positioned is a fourth dimension f, and the third dimension e is 1‰~5‰ time of the fourth dimension f. By setting the third dimension e to be 1‰~5‰ of the fourth dimension f, the damping liquid in the accommodating cavity 10 can have an appropriate thickness, which is therefore beneficial for the supporting piece 100 to better suppress the vibration of the motor rotating shaft 210.

Optionally, as shown in FIGS. 13 and 14, the inner wall of the first annular portion 61 includes a third inner wall 611, a fourth inner wall 612 and a third connecting wall 613, and the third inner wall 611 and the fourth inner wall 612 are arranged along the axial direction of the first annular portion 61, the third inner wall 611 is positioned radially outside the fourth inner wall 612, and the fourth inner wall 612 is connected with the third inner wall 611 through the third connecting wall 613, the third inner wall 611 abuts against the outer peripheral wall of the first bearing 230 installed on the motor rotating shaft 210, and the third connecting wall 613 abuts against the end wall of the first bearing 230..

The first annular portion 61 can well support the motor rotating shaft 210 through the first bearing 230 when the motor rotating shaft 210 is rotating. The first annular portion 61 abuts against the outer peripheral wall of the first bearing 230 through the third inner wall 611 and abuts against the end wall of the first bearing 230 through the third connecting wall 613, which is beneficial to improving the efficiency and accuracy of assembly between the first annular portion 61 and the first bearing 230.

Herein, optionally, the fourth inner wall 612 and the inner wall of the third annular portion 63 above-mentioned may be on the same annular surface to facilitate processing.

In order to avoid deterioration or precipitation of damping liquid in the accommodating cavity 10, as shown in FIGS. 2, 3, 5, 7, 9 and 12, the supporting piece 100 can also be provided with a liquid inlet 81 and a liquid outlet 82 which are communicating with the accommodating cavity 10, and the motor end cover 221 is provided with an oil inlet passage 241 and an oil outlet passage 242, and the oil inlet passage 241 communicates with the accommodating cavity 10 through the liquid inlet 81 on the supporting piece 100, and the oil outlet passage 242 communicates with the accommodating cavity 10 through the liquid outlet 82 on the supporting piece 100.

The oil inlet passage 241 on the motor end cover 221 is in communication with the accommodating cavity 10 through the liquid inlet 81, and the oil outlet passage 242 on the motor end cover 221 is in communication with the accommodating cavity 10 through the liquid outlet 82, so that damping liquid can be injected into the accommodating cavity 10 through the oil inlet passage 241 and the liquid inlet 81, and discharged to the outside of the accommodating cavity 10 through the liquid outlet 82 and the oil outlet passage 242, so that the damping liquid in the accommodating cavity 10 can be replaced, so as to prevent the damping liquid in the accommodating cavity 10 from deteriorating or precipitating, which will affect the vibration reduction effect on the motor rotating shaft 210.

The present invention does not limit the type of damping liquid, and optionally, the damping liquid may be lubricating oil, so that the accommodating cavity 10 can communicate with the lubricating oil circulation system of the motor 200.

The present invention does not limit the arrangement of the oil inlet passage 241 and the oil outlet passage 242. Optionally, as shown in FIGS. 2 and 3, the oil inlet passage 241 may at least include an oil inlet passage segment 2411 extending along the radial direction of the motor 200, and one end of the oil inlet passage segment 2411 is connected with the liquid inlet 81, and/or the oil outlet passage 242 may at least include an oil outlet passage segment 2421 arranged obliquely relative to the radial direction of the motor 200, and one end of the oil outlet passage segment 2421 is connected with the liquid outlet 82 and the other end of the oil outlet passage segment 2421 extends to the inner end face of the motor end cover 221. In this way, the lubricating oil can circulate into the accommodating cavity 10 through the oil inlet passage segment 2411 and the liquid inlet 81, and the lubricating oil circulating out from the accommodating cavity 10 can enter the housing 220 of the motor 200 through the liquid outlet 82 and the oil outlet passage segment 2421 to lubricate other components of the motor 200.

The liquid inlet 81 and the liquid outlet 82 can be arranged at any suitable position on the supporting piece 100 according to the actual situation, which is not limited by the present invention. Optionally, as shown in FIGS. 2 and 3, the liquid inlet 81 and the liquid outlet 82 can both be arranged on the first supporting sub-piece 30,

Optionally, as shown in FIG. 8, the liquid inlet 81 may be provided on the second supporting sub-piece 40, and the liquid outlet 82 may be provided on the first supporting sub-piece 30.

In order to facilitate the support of the supporting piece 100 between the outer peripheral side of the motor rotating shaft 210 and the motor end cover 221, in an embodiment, as shown in FIGS. 2 and 3, the inner side of the motor end cover 221 is provided with a mounting groove 2211, and along the radial direction of the motor rotating shaft 210, the side of the supporting piece 100 away from the motor rotating shaft 210 abuts against the groove wall of the mounting groove 2211.

In the present invention, the supporting piece 100 can be assembled with the motor end cover 221 in any suitable way, which is not limited in the present invention. Optionally, the second supporting sub-piece 40 can be assembled with the housing 220 by hot-fitting or pre-casting (for example, the second supporting sub-piece 40 is assembled into the mounting groove 2211 of the motor end cover 221 by hot-fitting or pre-casting), and then the first sealing ring 51 is assembled to the first sealing sub-piece, and finally, the first sealing sub-piece and the first sealing ring 51 are hot-pressed into the second supporting sub-piece 40 to complete the assembly of the motor end cover 221 with the supporting piece 100.

According to a second aspect of the present invention, as shown in FIG. 1, an electric drive system 400 is provided, including the motor 200 described above.

In the present invention, optionally, as shown in FIG. 1, the electric drive system 400 may optionally further include a reducer 300, and an input shaft 350 of the reducer is connected with the motor rotating shaft 210. The motor rotating shaft 210 and the input shaft 350 of the reducer can be connected by spline and gear shaft to realize the transmission connection.

As shown in FIG. 1, the motor 200 may further include an iron core 250, a motor housing bearing chamber 260, a second bearing 270 and a wave spring 280, and the reducer 300 may further include a third bearing 310, a fourth bearing 320, a reducer housing bearing chamber 330 and an adjusting gasket 340. The iron core 250 is fitted over the motor rotating shaft 210 to generate torque, the second bearing 270 is provided in the bearing chamber 260 of the motor housing to support the end of the motor rotating shaft 210 far away from the motor end cover 221, and the wave spring 280 provides pre-tension for the first bearing 230 and the second bearing 270. The third bearing 310 and the fourth bearing 320 are positioned in the two reducer housing bearing chambers 330, respectively, to support the two ends of the input shaft 350 of the reducer, and the adjusting gasket 340 is used to provide pre-tension for the third bearing 310 and the fourth bearing 320.

According to a third aspect of the present invention, a vehicle is provided, including the electric drive system 400 described above or the motor 200 described above.

## Claims

1. A motor (200) comprising a motor rotating shaft (210), a supporting piece (100) and a housing (220), wherein the housing (220) comprises a motor end cover (221), and the supporting piece (100) is supported between an outer peripheral side of the motor rotating shaft (210) and the motor end cover (221);
wherein an accommodating cavity (10) configured to accommodate a damping liquid is provided inside the supporting piece (100);
the supporting piece (100) is provided to undergo elastic deformation under an abutment of the motor rotating shaft (210).

2. The motor (200) according to claim 1, wherein the supporting piece (100) comprises a first supporting sub-piece (30) and a second supporting sub-piece (40), and the accommodating cavity (10) is provided between the first supporting sub-piece (30) and the second supporting sub-piece (40), and at least one of the first supporting sub-piece (30) and the second supporting sub-piece (40) is provided to undergo elastic deformation under the abutment of the motor rotating shaft (210).

3. The motor (200) according to claim 2, wherein the supporting piece (100) further comprises a sealing ring (51), and the sealing ring (51) is arranged between an inner wall of the first supporting sub-piece (30) and an inner wall of the second supporting sub-piece (40); and
the sealing ring (51), the first supporting sub-piece (30) and the second supporting sub-piece (40) enclose the accommodating cavity (10).

4. The motor (200) according to claim 2, wherein the first supporting sub-piece (30) is provided at a side of the accommodating cavity (10) close to the motor rotating shaft (210), the second supporting sub-piece (40) is provided at a side of the accommodating cavity (10) far from the motor rotating shaft (210), and the first supporting sub-piece (30) is provided to undergo elastic deformation under the abutment of the motor rotating shaft (210);
wherein the first supporting sub-piece (30) and the second supporting sub-piece (40) are both in an annular structure, and at least part of the first supporting sub-piece (30) is positioned radially inside the second supporting sub-piece (40).

5. The motor (200) according to claim 4, wherein an outer wall of the first supporting sub-piece (30) comprises a first outer wall (31) and a second outer wall (32), wherein the first outer wall (31) and the second outer wall (32) are arranged along an axial direction of the first supporting sub-piece (30), and the second outer wall (32) is positioned radially inside the first outer wall (31); and
the first outer wall (31) is hermetically connected with the second supporting sub-piece (40), the second outer wall (32) and the second supporting sub-piece (40) are provided at intervals in a radial direction, the accommodating cavity (10) is positioned between the second outer wall (32) and the second supporting sub-piece (40), and the second outer wall (32) is able to move in a direction towards the second supporting sub-piece (40) when the supporting piece (100) is undergoing elastic deformation;
optionally, the first outer wall is abutted against and attached to the inner wall of the second supporting sub-piece in an assembly with a pre-tension force..

6. The motor (200) according to claim 5, wherein the supporting piece (100) further comprises a first sealing ring (51), wherein the first sealing ring (51) is provided between the second outer wall (32) and an inner wall of the second supporting sub-piece (40); and
the first sealing ring (51), the first supporting sub-piece (30) and the second supporting sub-piece (40) enclose the accommodating cavity (10);
optionally, at least one of the second outer wall (32) and the inner wall of the second supporting sub-piece (40) is provided with a first annular snap groove (321), and a part of the first sealing ring (51) is embedded in the first annular snap groove (321).

7. The motor (200) according to claim 5, wherein the first supporting sub-piece (30) further comprises a first annular boss (34), wherein the first annular boss (34) is provided at one end of the second outer wall (32) far from the first outer wall (31); and
the supporting piece (100) further comprises a second sealing ring (52), and the second sealing ring (52) is provided between an outer peripheral wall of the first annular boss (34) and the motor end cover (221);
optionally, the outer peripheral wall of the first annular boss (34) is provided with a second annular snap groove (341), and a part of the second sealing ring (52) is embedded in the second annular snap groove (341).

8. The motor (200) according to claim 4, wherein the motor (200) further comprises a first bearing (230) fitted over the motor rotating shaft (210), and an inner wall of the first supporting sub-piece (30) comprises a first inner wall (36), a second inner wall (37) and a second connecting wall (38), wherein the first inner wall (36) and the second inner wall (37) are arranged along an axial direction of the first supporting sub-piece (30), and the second inner wall (37) is positioned radially outside the first inner wall (36), and the second inner wall (37) is connected with the first inner wall (36) through the second connecting wall (38), and the second inner wall (37) abuts against a peripheral wall of the first bearing (230), and the second connecting wall (38) abuts against an end wall of the first bearing (230).

9. The motor (200) according to claim 4, wherein the first supporting sub-piece (30) is provided with a stiffness reducing portion (90);
wherein the first supporting sub-piece (30) and the second supporting sub-piece (40) are both in an annular structure, and the first supporting sub-piece (30) comprises a first annular portion (61) and a second annular portion (62) which are connected in an axial direction of the first supporting sub-piece (30);
the first annular portion (61) is positioned at an inner side of the second supporting sub-piece (40), and the accommodating cavity (10) is positioned between the first annular portion (61) and the second supporting sub-piece (40); and
the second annular portion (62) is provided with the stiffness reducing portion (90).

10. The motor (200) according to claim 9, wherein the stiffness reducing portion (90) comprises a hollowed-out portion (91) positioned in the second annular portion (62);
optionally, a plurality of hollowed-out portions (91) are provided, and the plurality of hollowed-out portions (91) are arranged at equal intervals along a circumferential direction of the second annular portion (62), and two adjacent hollowed-out portions (91) are separated by a connecting rib (92).

11. The motor (200) according to claim 9, wherein the first supporting sub-piece (30) further comprises a third annular portion (63), wherein the third annular portion (63) is connected to one end of the second annular portion (62) far from the first annular portion (61); and
the third annular portion (63) is connected with the housing (220);
optionally, at least one connecting tab (631) is provided on an outer peripheral wall of the third annular portion (63), and the connecting tab (631) is suitable for being connected with an end face of the housing (220) through a fastener (70); and/or,
the outer peripheral wall of the third annular portion (63) is abutted against and attached to an inner peripheral wall of the housing (220) in an assembly with a pre-tension force.

12. The motor (200) according to claim 9, wherein the first supporting sub-piece (30) further comprises a third sealing ring (64) and a fourth sealing ring (65), and the third sealing ring (64) and the fourth sealing ring (65) are provided at intervals along the axial direction of the first annular portion (61) between an outer peripheral wall of the first annular portion (61) and an inner wall of the second supporting sub-piece (40); and
the first annular portion (61), the second supporting sub-piece (40), the third sealing ring (64) and the fourth sealing ring (65) jointly enclose the accommodating cavity (10);
optionally, at least one of the outer peripheral wall of the second annular portion (62) and the inner wall of the second supporting sub-piece (40) is provided with a third annular snap groove (66), and a part of the third sealing ring (64) is embedded in the third annular snap groove (66); and/or,
at least one of the outer peripheral wall of the second annular portion (62) and the inner wall of the second supporting sub-piece (40) is provided with a fourth annular snap groove (67), and a part of the fourth sealing ring (65) is embedded in the fourth annular snap groove (67).

13. The motor (200) according to any one of claims 1 to 12, wherein the supporting piece (100) is further provided with a liquid inlet (81) and a liquid outlet (82), which are communicated with the accommodating cavity (10); and
the motor end cover (221) is provided with an oil inlet passage (241) and an oil outlet passage (242), wherein the oil inlet passage (241) is in communication with the accommodating cavity (10) through the liquid inlet (81) on the supporting piece (100), and the oil outlet passage (242) is in communication with the accommodating cavity (10) through the liquid outlet (82) on the supporting piece (100);
optionally, the oil inlet passage (241) comprises at least an oil inlet passage segment (2411) extending along a radial direction of the motor (200), and one end of the oil inlet passage segment (2411) is connected with the liquid inlet (81); and/or
the oil outlet passage (242) comprises at least an oil outlet passage segment (2421) arranged obliquely relative to the radial direction of the motor (200), one end of the oil outlet passage segment (2421) is connected with the liquid outlet (82), and the other end of the oil outlet passage segment (2421) extends to an inner end face of the motor end cover (221).

14. An electric drive system (400), comprising the motor (200) according to any one of claims 1 to 13.

15. A vehicle, comprising:
the electric drive system (400) according to claim 14; or
the motor (200) according to any one of claims 1 to 13.
